(19) Europäisches Patentamt / European Patent Office / Office européen des brevets

(11) **EP 3 754 372 A1**

(12) **EUROPEAN PATENT APPLICATION**
published in accordance with Art. 153(4) EPC

(43) Date of publication:
**23.12.2020 Bulletin 2020/52**

(21) Application number: **18911925.8**

(22) Date of filing: **30.03.2018**

(51) Int Cl.:
*G01S 13/86* (2006.01)    *G01S 13/91* (2006.01)
*G08G 1/01* (2006.01)

(86) International application number:
**PCT/JP2018/013851**

(87) International publication number:
**WO 2019/187093 (03.10.2019 Gazette 2019/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Mitsubishi Electric Corporation
Tokyo 100-8310 (JP)**

(72) Inventors:
• **HOSOI, Kyoko
  Tokyo 100-8310 (JP)**
• **NAKURA, Kenichi
  Tokyo 100-8310 (JP)**
• **SUEHIRO, Takeshi
  Tokyo 100-8310 (JP)**

(74) Representative: **Pfenning, Meinig & Partner mbB
Patent- und Rechtsanwälte
An der Frauenkirche 20
01067 Dresden (DE)**

(54) **OBJECT IDENTIFICATION DEVICE**

(57) An object identification device (10) according to the present invention includes: an acquisition unit (11) that acquires, from a sensor that measures a position of an object and a speed of the object, sensor information measured by the sensor, and acquires size information from a device that transmits size information indicating a size and a position of the object; a designator adding unit (12) that adds, to each piece of the sensor information, a sensor position designator indicating which part of the object is likely to be detected; and an information integration unit (13) that determines, based on the sensor position designator, whether the object corresponding to the size information and the object corresponding to the sensor information are the same.

FIG.1

EP 3 754 372 A1

**Description**

Field

The present invention relates to an object identification device.

Background

In order to establish a smooth traffic network, switching from conventional driving by human drivers to automatic driving by automatic traveling vehicles operated by system (artificial intelligence) drivers has been required. The realization of automatic driving requires a map that contains dynamic information including various types of information such as the movement of surrounding vehicles and people, and is updated frequently with an update cycle of less than 100 milliseconds, instead of a static map that only shows roads and buildings and is updated infrequently. Such a map that contains dynamic information and is updated frequently is called a dynamic map. In order to create a dynamic map, it is necessary to collect information using a plurality of sensors installed on the roadside, identify vehicles traveling on the road, and generate information at high speed. In a case where a dynamic map is created by an automatic traveling vehicle, identification information of vehicles traveling on the road is distributed to the automatic traveling vehicle.

Sensors include a camera that can obtain size information that is information on the size of the measured vehicle, and a radar or Light Detection and Ranging (LIDAR) that cannot obtain size information but can continuously measure positions and speeds. The following description uses a radar as an example of a device that cannot obtain size information but can continuously measure positions and speeds. In a case where a plurality of radars are used, the plurality of radars transmit measurement results of different parts of the vehicle that the radars can measure, depending on the installation positions of the radars, radar characteristics, or the orientation of the vehicle that the radars can measure. Because the size of some large vehicles can exceed 10 m, if the measurement result of a radar installed on the roadside in front of the vehicle and the measurement result of a radar installed on the roadside behind the vehicle are integrated without any size information of the vehicle, it is difficult to determine whether the measurement results of the plurality of radars are for the same vehicle. For example, the measurement results for the same vehicle can be erroneously recognized as the measurement results for different vehicles.

Patent Literature 1 discloses an object identification device that combines the measurement result of a radar and the measurement result of a camera, and determines whether the vehicle detected by the radar and the target vehicle as the measurement result of the camera are the same vehicle.

Citation List

Patent Literature

Patent Literature 1: Japanese Patent Application Laid-open No. 2016-153775

Summary

Technical Problem

However, the object identification device described in Patent Literature 1 assumes that the radar device and the camera face in the same direction to determine whether the vehicle detected by the radar and the target vehicle as the measurement result of the camera are the same vehicle. Cameras and radar devices are installed on the roadside in various orientations, but the object identification device described in Patent Literature 1 cannot be applied to object identification that uses cameras and radar devices installed on the roadside, which is problematic.

The present invention has been made in view of the above, and an object thereof is to obtain an object identification device capable of preventing errors in determining whether measurement results of a plurality of sensors are for the same vehicle.

Solution to Problem

To solve the above problem and achieve an object, an object identification device according to the present invention includes: an acquisition unit to acquire, from a sensor that measures a position of an object and a speed of the object, sensor information measured by the sensor, and acquire size information from a device that transmits size information indicating a size and a position of the object; a designator adding unit to add, to each piece of the sensor information, a sensor position designator indicating which part of the object is likely to be detected; and an information integration unit to determine, based on the sensor position designator, whether the object corresponding to the size information and the object corresponding to the sensor information are the same.

Advantageous Effects of Invention

The object identification device according to the present invention can achieve the effect of reducing or preventing errors in determining whether measurement results of a plurality of sensors are for the same vehicle.

Brief Description of Drawings

FIG. 1 is a diagram illustrating functional blocks of an object identification device according to a first embodiment.
FIG. 2 is a diagram illustrating a control circuit according to the first embodiment.
FIG. 3 is a diagram illustrating exemplary definitions of sensor position designators according to the first embodiment.
FIG. 4 is a diagram illustrating exemplary settings of sensor position designators according to the first embodiment.
FIG. 5 is a diagram illustrating different exemplary settings of sensor position designators according to the first embodiment.
FIG. 6 is a diagram illustrating the operation of identifying a vehicle according to the first embodiment.
FIG. 7 is a diagram illustrating a method of calculating the positions of six sensor position designators using an image according to the first embodiment.
FIG. 8 is a flowchart illustrating the operation of the object identification device according to the first embodiment.
FIG. 9 is a diagram illustrating exemplary definitions of sensor position designators according to a second embodiment.
FIG. 10 is a diagram illustrating exemplary settings of sensor position designators according to the second embodiment.
FIG. 11 is a diagram illustrating exemplary settings of sensor position designators according to a third embodiment.

Description of Embodiments

Hereinafter, an object identification device according to embodiments of the present invention will be described in detail based on the drawings. The present invention is not limited to the embodiments.

First Embodiment.

An object identification device according to the first embodiment is installed on the roadside and detects, for example, information on a vehicle traveling on the road. A vehicle is an example of an object. A sensor such as a millimeter wave radar or LIDAR can obtain sensor information that is information on the position of a part of an object such as a vehicle and the speed of the object, but cannot measure the entire object. For this reason, when measurement results are obtained from a plurality of sensors, it is difficult to determine whether these measurement results are for the same object or for different objects based only on these measurement results. Therefore, it is necessary to identify which part of which object has been measured as each measurement result using size information that is information indicating the size and position of the object. In the present embodiment, sensors are assigned sensor position designators, i.e. values indicating which part of an object is likely to be detected, whereby measurement results of sensors can be easily associated with objects. The following description presents examples in which the object to be identified by the object identification device is a vehicle.

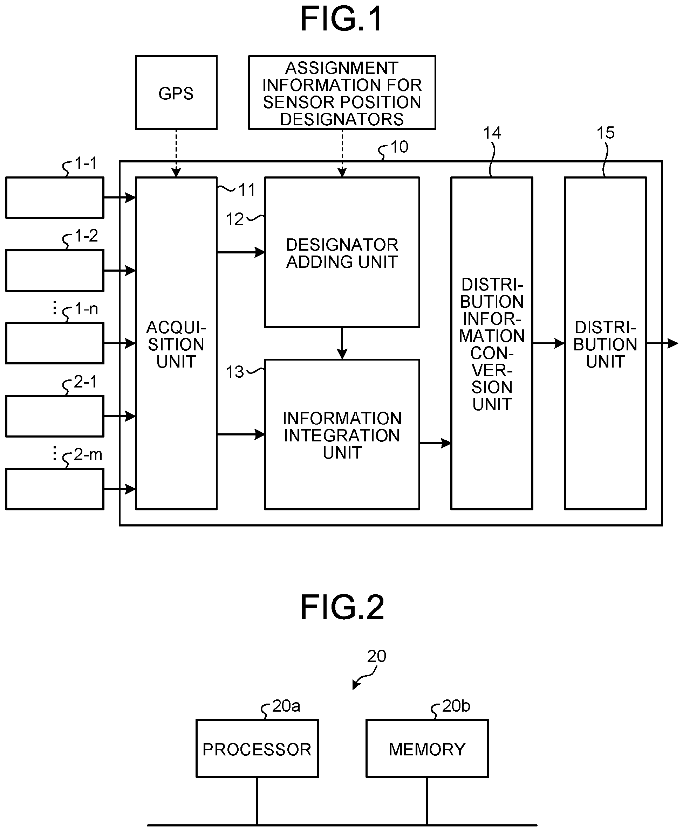

FIG. 1 is a diagram illustrating functional blocks of the object identification device according to the first embodiment. The object identification device 10 includes an acquisition unit 11, a designator adding unit 12, an information integration unit 13, a distribution information conversion unit 14, and a distribution unit 15. The acquisition unit 11 receives sensor information from sensors 1-1 to 1-n. The acquisition unit 11 also receives size information from size information transmitters 2-1 to 2-m. The acquisition unit 11 also acquires the current time from a global positioning system (GPS). The distribution information conversion unit 14 converts the information integrated by the information integration unit 13 into information for distribution. The distribution unit 15 distributes the information converted for distribution to a dynamic map user such as an automatic traveling car. The sensors 1-1 to 1-n may be collectively referred to as the sensor(s) 1. The size information transmitters 2-1 to 2-m may be collectively referred to as the size information transmitter(s) 2. The sensor 1 is installed on the roadside and obtains sensor information from a vehicle. The size information transmitter 2 obtains the size information of a vehicle. The size information transmitter 2 is, for example, a camera that is installed above a road and has a transmission function of acquiring an image of an entire vehicle from above, or an on-board instrument that transmits the vehicle type information of the vehicle that the on-board instrument belongs to, the size information of the vehicle, and the position information of the vehicle at a specific time.

The designator adding unit 12 receives sensor information from the acquisition unit 11. In the present embodiment, the designator adding unit 12 receives assignment information from an external device or the like. Assignment information is information that specifies the definition of each sensor position designator for assignment of sensor position designators. However, assignment information for sensor position designators may be created inside the object identification device 10. The designator adding unit 12 assigns sensor position designators to the sensors 1-1 to 1-n based on assignment information. The designator adding unit 12 also adds a sensor position designator to sensor information to generate first information, and transmits the first information to the information integration unit 13. Details of sensor position designators will be described later.

The information integration unit 13 receives first information from the designator adding unit 12. The information integration unit 13 also receives size information from the acquisition unit 11. The information integration unit 13 uses a plurality of pieces of first information and size information to determine whether the plurality of pieces of first information are associated with the same object. The information integration unit 13 uses a plurality of pieces of first information and information on the position indicated by a sensor position designator calculated using size information to determine whether the plurality of pieces of first information are for the same vehicle.

The distribution information conversion unit 14 converts information on the position of the vehicle which is indicated by traveling and transverse directions into information on the position of the vehicle for distribution that uses latitude and longitude or lane links. The distribution unit 15 distributes the information for distribution converted by the distribution information conversion unit 14 to a dynamic map user such as an automatic traveling vehicle.

The acquisition unit 11, the designator adding unit 12, the information integration unit 13, the distribution information conversion unit 14, and the distribution unit 15 according to the first embodiment are implemented by processing circuitry that is electronic circuitry that performs each process.

The processing circuitry may be dedicated hardware or a control circuit including a memory and a central processing unit (CPU) that executes programs stored in the memory. The memory as used herein is, for example, a nonvolatile or volatile semiconductor memory such as a random access memory (RAM), a read only memory (ROM), or a flash memory, a magnetic disk, an optical disk, or the like. In a case where the processing circuitry is a control circuit including a CPU, this control circuit is, for example, a control circuit 20 having the configuration illustrated in FIG. 2.

As illustrated in FIG. 2, the control circuit 20 includes a processor 20a, which is a CPU, and a memory 20b. In a case where the processing circuitry is implemented by the control circuit 20 illustrated in FIG. 2, the processor 20a reads and executes the program corresponding to each process stored in the memory 20b, thereby implementing the processing circuitry. The memory 20b is also used as a temporary memory for each process performed by the processor 20a.

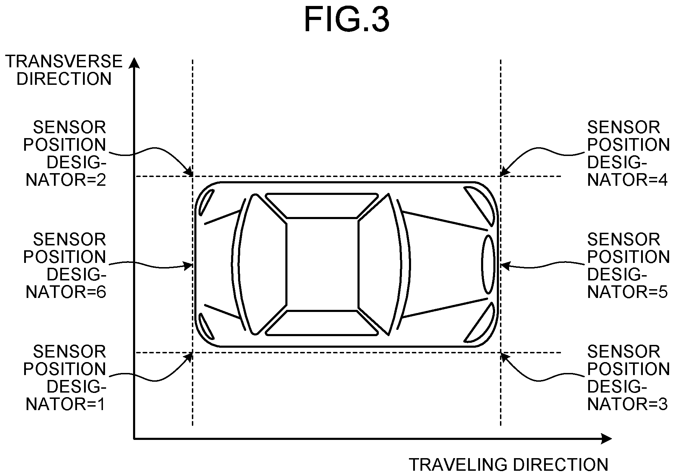

Sensor position designators will be described. The value of a sensor position designator is determined according to the position of each part of the vehicle relative to the vehicle. FIG. 3 is a diagram illustrating exemplary definitions of sensor position designators according to the first embodiment. In FIG. 3, the vertical axis represents the transverse direction of the road and the horizontal axis represents the traveling direction of the road. The vehicle is provided in the range defined by the vertical axis and the horizontal axis. In the present embodiment, left and right are determined based on the traveling direction of the road. That is, the extending direction of the vertical axis in FIG. 3 is the left. The extending direction of the horizontal axis is defined as the front. In FIG. 3, the sensor position designator located at the rear right end of the vehicle is defined as 1. The sensor position designator located at the rear left end of the vehicle is defined as 2. The sensor position designator located at the front right end of the vehicle is defined as 3. The sensor position designator located at the front left end of the vehicle is defined as 4. The sensor position designator located at the front center of the vehicle or at a position that does not clearly belong to either the left or right end of the vehicle is defined as 5. The sensor position designator located at the rear center of the vehicle or at a position that does not clearly belong to either the left or right end of the vehicle is defined as 6. Information indicating these definitions of sensor position designators is the assignment information for sensor position designators that the designator adding unit 12 receives.

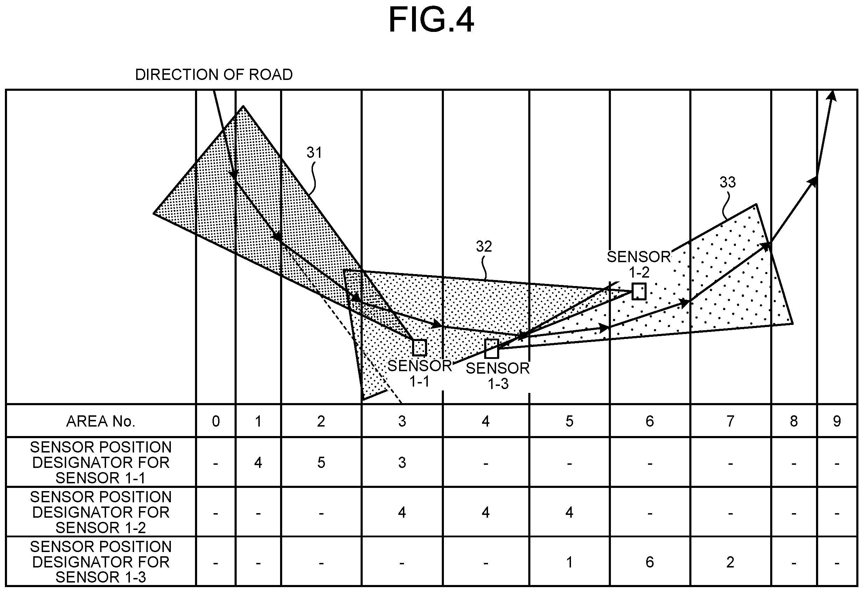

A sensor position designator is set for each sensor 1 and for each road area. Below is a description of road areas. FIG. 4 is a diagram illustrating exemplary settings of sensor position designators according to the first embodiment. In FIG. 4, arrows indicate the traveling direction of the road. Road areas are defined by dividing road information obtained by approximating a road with a plurality of straight lines. In FIG. 4, an arc-shaped road is approximated with ten straight lines, and each of the ten straight lines corresponds to one area. That is, one straight line forms one area. Note that the road coordinate system may be a coordinate system expressed by the traveling and transverse directions of the road, or may be a general orthogonal coordinate system. Information on the position of each divisional road area is held by the information integration unit 13.

The operation of setting a sensor position designator for each sensor 1 and for each road area will be described. An example in which the sensor position designators defined as in FIG. 3 are assigned to each sensor 1 and each road area will be described with reference to FIG. 4. In the example illustrated in FIG. 4, the sensors 1-1, 1-2, and 1-3 measure a vehicle in the ten road areas. A measurement range 31, a measurement range 32, and a measurement range 33 indicated by triangles are ranges in which the sensors 1-1, 1-2, and 1-3 can measure, respectively. The sensor 1-1 transmits the measurement points measured in the measurement range 31 to the object identification device 10. Similarly, the sensor 1-2 transmits the measurement points measured in the measurement range 32 to the object identification device 10. Similarly, the sensor 1-3 transmits the measurement points measured in the measurement range 33 to the object identification device 10.

The left/right determination for the sensor position designator that is set for each road area involves extending the straight line defined for each road area to the sensor 1 and determining which position relative to the extended straight line the sensor 1 is located at. For example, consider the case in which a sensor position designator is set for the area No. 1 of the sensor 1-1. FIG. 4 depicts a broken straight line extending from the straight line defined in the area No. 1 to the sensor 1-1. In this case, the sensor 1-1 is located on the left side with respect to the traveling direction of the extended broken line. The sensor 1-1 is positioned in front of the area No. 1 and the sensor 1-1 is located on the left side of the extended straight line. Therefore, the sensor 1-1 is determined to be likely to measure the front left end of the vehicle, and the sensor position designator 4 is set for the area No. 1 of the sensor 1-1. Similarly, consider the case in which a sensor position designator is set for the area No. 2 of the sensor 1-1. When the straight line of the area No. 2 is extended to the sensor 1-1, the sensor 1-1 is positioned on the center of the extended straight line. For this reason, the sensor 1-1 is determined to be likely to measure the front center of the vehicle in the area No. 2, and the sensor position designator 5 is set. In this manner, a sensor position designator is set for each sensor 1 and for each road area.

At the points outside the measurement range of the sensor 1, the measurement value of the sensor 1 is not valid, so that no sensor position designators are assigned. Alternatively, a sensor position designator such as 0 indicating that the measurement value of the sensor 1 is not valid may be defined so that the measurement value of the sensor can be invalidated when the sensor position designator 0 is set. For example, because the measurement range 31 of the sensor 1-1 corresponds to the areas No. 1 to NO. 3, sensor position designators are not assigned for any areas other than the areas No. 1 to 3, or the sensor position designator 0 is set for the areas other than the areas No. 1 to 3.

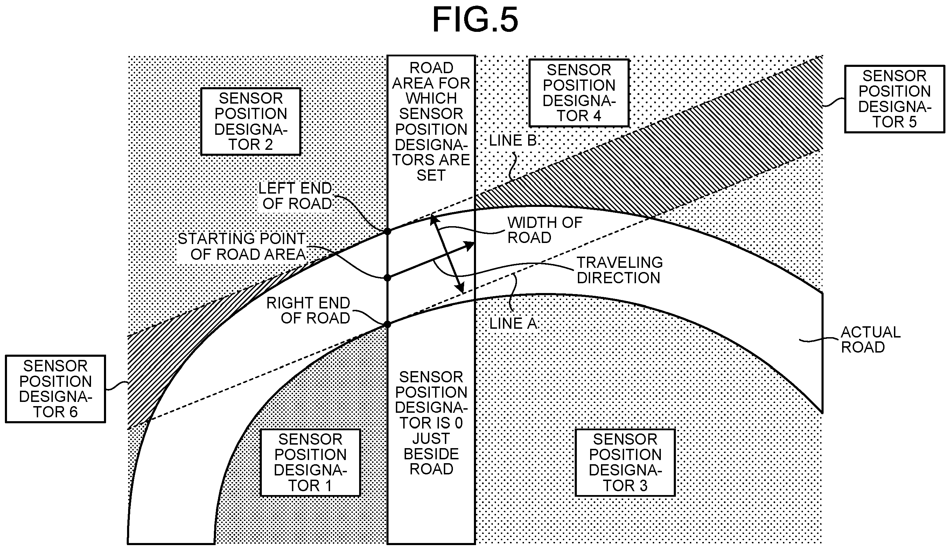

Different exemplary settings of sensor position designators will be described. FIG. 5 is a diagram illustrating different exemplary settings of sensor position designators according to the first embodiment. Note that FIG. 5 depicts exemplary settings of sensor position designators that are based on the assumption that the sensor 1 is installed at a position away from the roadside of the road where a vehicle is measured, or that the sensor 1 is installed on a road that is not illustrated. The sensor position designator 5 and the sensor position designator 6 are set using the starting point of the road in the road area and the width of the road. By extending the right end point of the road and the left end point of the road in parallel with the traveling direction, the extended line of the right end point of the road (referred to as the line A) and the extended line of the right end point of the road (referred to as the line B) are obtained. When the sensor 1 is located between the line A and the line B, the left/right determination for sensor position designators is considered impossible. Therefore, the sensor position designator 5 is set for the sensor 1 on the front side of the vehicle, and the sensor position designator 6 is set for the sensor 1 on the rear side of the vehicle. In FIG. 4, the sensor position designator 3 is set for the sensor 1 located on the right side of the line A and in front of the vehicle. The sensor position designator 1 is set for the sensor 1 located on the right side of the line A and behind the vehicle. In addition, the sensor position designator 4 is set for the sensor 1 located on the left side of the line B and in front of the vehicle. The sensor position designator 2 is set for the sensor 1 located on the left side of the line B and behind the vehicle. If the sensor 1 is a millimeter wave radar, the speed of the vehicle cannot be measured just beside the road. Therefore, for the sensor 1 installed just beside the road, no sensor position designator is set to indicate that the measurement result of the sensor 1 is invalid, or the sensor position designator 0 indicating invalidation is set.

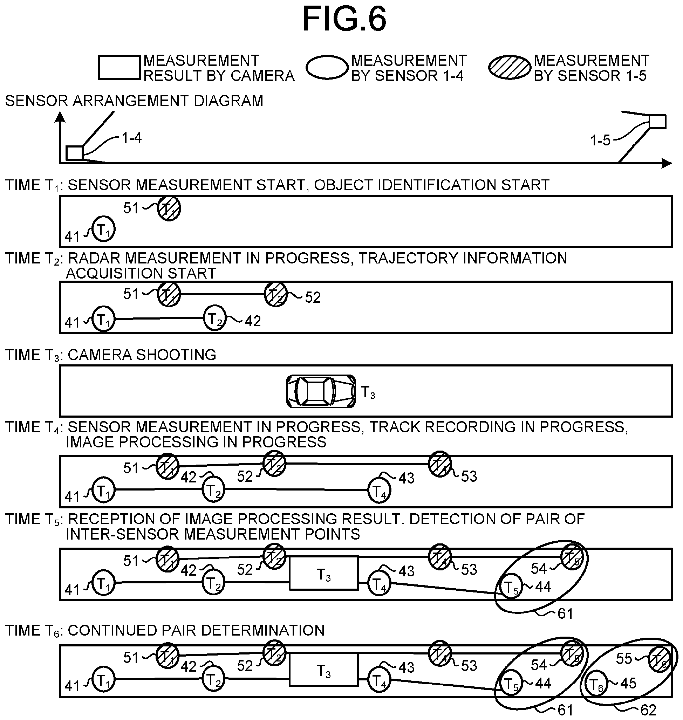

The information integration unit 13 identifies an object using first information, i.e. information obtained by adding a sensor position designator to sensor information, and size information. FIG. 6 is a diagram illustrating the operation of identifying a vehicle according to the first embodiment. FIG. 6 depicts, using the sensors 1-4 and 1-5 and a camera that is the size information transmitter 2, an example of the operation of the information integration unit 13 for identifying an object using information obtained by adding a sensor position designator to sensor information and size information. The sensors 1-4 and 1-5 are, for example, millimeter wave radars. The example illustrated in FIG. 6 is based on the assumption that each of the sensors 1-4 and 1-5 has a fixed sensor position designator and observes the position of the vehicle at regular intervals. It is assumed that the camera can measure the entire vehicle from above and acquire size information. However, it is also assumed that the camera has a limited angle of view for measurement and acquires an image of the vehicle only at a specific time.

In the sensor arrangement diagram of FIG. 6, the sensors 1-4 and 1-5 are arranged using the horizontal axis as the traveling direction of the road and the vertical axis as the transverse direction of the road. In the drawing, circles with no diagonal lines inside are measurements by the sensor 1-4, and circles with diagonal lines inside are measurements by the sensor 1-5. The straight lines extending from the sensors 1-4 and 1-5 indicate the measurement range of each of the sensors 1-4 and 1-5. The sensor 1-4 is installed on the right side of the road and faces in the same direction as the traveling direction to measure the vehicle. For this reason, the sensor 1-4 is located at a position where the rear right end of the vehicle is likely to be measured, so the sensor position designator 1 is set. The sensor 1-5 is installed on the left side of the road and faces in the opposite direction of the traveling direction to measure the vehicle. For this reason, the sensor 1-5 is likely to measure the front left end of the vehicle, so the sensor position designator 4 is set. Because the camera photographs the entire vehicle from above, the size of the entire vehicle and the position of the vehicle at a specific time can be clearly determined. The camera transmits, to the object identification device 10, size information such as an image that is information on the size of the entire vehicle and information on the position of the vehicle. For this reason, for the specific time of the acquisition of size information, the information integration unit 13 can calculate, using the size information, the position corresponding to the sensor position designator added to the sensor information transmitted from the sensor 1. Here, an example of the operation of the object identification device 10 will be described in chronological order from time $T_1$ to time $T_6$ in FIG. 6. From time $T_1$ to time $T_6$, the vehicle moves in the traveling direction of the road.

At time $T_1$, the sensors 1-4 and 1-5 start measuring the position of the vehicle and the speed of the vehicle in response to the vehicle entering the corresponding measurement ranges. The sensor information measured by the sensor 1-4 at time $T_1$ is indicated by a measurement point 41. The sensor information measured by the sensor 1-5 at time $T_1$ is indicated by a measurement point 51. At time $T_1$, it is unknown whether the sensors 1-4 and 1-5 are measuring the same vehicle. The measurement points measured by the sensors 1-4 and 1-5 are transmitted to the object identification device 10. The object identification device 10 records the measurement points measured by the sensors 1-4 and 1-5 as trajectory information.

At time $T_2$, the sensors 1-4 and 1-5 continue measuring. In addition to the position of the vehicle at each time, the speed of the vehicle is recorded as trajectory information. Measurement points 42 and 52 are the measurement points measured by the sensors 1-4 and 1-5 at time $T_2$, respectively.

At time $T_3$, camera shooting is performed by the camera and an image is acquired. Time $T_3$ is the specific time described above. The image captured by the camera is transmitted to the acquisition unit 11.

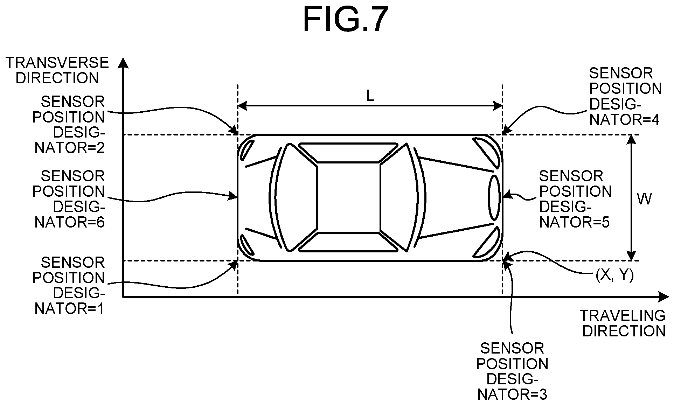

At time $T_4$, the information integration unit 13 uses the image to calculate the positions of the six sensor position designators of the vehicle at $T_3$. The six sensor position designators are also called all sensor position designators. The distance between the six sensor position designators is also calculated. FIG. 7 is a diagram illustrating a method of calculating the positions of the six sensor position designators using the image according to the first embodiment. In the method of calculating the positions of the six sensor position designators, for example, when the position information of the sensor position designator 3 (coordinate in the traveling direction is X, coordinate in the transverse direction is Y), the length L of the vehicle, and the width W of the vehicle are obtained from the image, the coordinates of the position information of the sensor position designator 4 are X in the traveling direction and Y+W in the transverse direction. Similarly, other sensor position designators can be calculated using the position information of one sensor position designator, the length of the vehicle, and the width of the vehicle. Note that the position information of the six sensor position designators may be obtained from the image. Measurement points 43 and 53 are the measurement points measured by the sensors 1-4 and 1-5 at time $T_4$, respectively.

At time $T_5$, the information integration unit 13 compares the positions of the sensor position designators of the vehicle acquired by the sensors 1-4 and 1-5 at time $T_5$ with, among the positions of the six sensor position designators of the vehicle at time $T_3$, the positions of the sensor position designators having the same values as the sensor position designators of the vehicle acquired by the sensors 1-4 and 1-5. As a result of the comparison, if the difference between the positions is within a first threshold, the sensor position designator acquired by each of the sensors 1-4 and 1-5 and the sensor position designator having the same value are regarded as measurement results for the same vehicle. Here, when comparing the sensor position designators, the sensor information as the measurement results of the sensors 1-4 and 1-5 and the size information as the measurement result of the camera are difficult to compare directly because the acquisition times thereof are not the same. Therefore, the sensor information of the sensors 1-4 and 1-5 is corrected to the acquisition time of the size information of the camera. The sensor information of the sensors 1-4 and 1-5 at times $T_1$, $T_2$, and $T_4$ is registered in the information integration unit 13 as trajectory information. Therefore, in order to correct the sensor information of the sensors 1-4 and 1-5, the sensor information at time $T_2$ or time $T_4$ closest to the measurement time $T_3$ of the camera is used. For example, if the traveling directional position X2 at time $T_2$, the traveling directional position X4 at time $T_4$, the traveling directional speed V2 of the vehicle at time $T_2$, and the traveling directional speed V4 of the vehicle at time $T_4$ are known, the average speed (V_ave) from time $T_2$ to time $T_4$ can be calculated with Formula (1) using them.

$$V\_ave = (V2 + V4)/2 \ldots \quad (1)$$

Next, the traveling directional position at either one of time $T_2$ and time $T_4$ which is closer to time $T_3$ is selected,

and the traveling directional position (hosei_X3) corrected to correspond to time $T_3$ is calculated with Formula (2).

$$\texttt{hosei\_X3=X2+V\_ave×(T}_3\texttt{-T}_2\texttt{)...}\quad\texttt{(2)}$$

If it is determined that the difference between the position (hosei_X3) of the sensor position designator calculated using the sensor information corrected to correspond to time $T_3$ and the position of the sensor position designator calculated using the size information at time $T_3$ is within the threshold, it can be determined that the sensor information and the size information are for the same object.

Using the above method, the position of the measurement point 44 measured by the sensor 1-4 with the sensor position designator 1 is compared with the position of the measurement point with the sensor position designator 1 among the six sensor position designators. As a result of the comparison, if the difference between the positions is within the first threshold, the measurement point 44 measured by the sensor 1-4 and the vehicle measured by the camera are associated with each other as the same vehicle. Similarly, the position of the measurement point 54 measured by the sensor 1-5 with the sensor position designator 4 is compared with the position of the measurement point with the sensor position designator 4 among the six sensor position designators. As a result of the comparison, if the difference between the positions in the traveling direction and the transverse direction is within the first threshold, the measurement point 54 measured by the sensor 1-5 and the vehicle measured by the camera are associated with each other as the same vehicle. That is, the track including the measurement point 54 measured by the sensor 1-5 is associated with second information which includes the center position of the vehicle calculated using the size information obtained by the camera at time $T_3$ and the acquisition time of the size information. As a result, the track acquired by the sensor 1-4 and the track acquired by the sensor 1-5 can be determined to be derived from the same vehicle. The measurement points 44 and 54 are the measurement points measured by the sensors 1-4 and 1-5 at time $T_5$, respectively. A track pair 61 is a pair of tracks of the same vehicle determined at time $T_5$.

At time $T_6$, the information integration unit 13 continues integrating position information based on track pair information. Measurement points 45 and 55 are the measurement points measured by the sensors 1-4 and 1-5 at time $T_6$, respectively. A track pair 62 is a pair of tracks of the same vehicle determined at time $T_6$.

In the example of FIG. 6, the sensor position designators of the sensors 1-4 and 1-5 do not change in the period from time $T_1$ to time $T_6$. However, same-vehicle determination can also be performed when the sensor position designators of the sensors 1-4 and 1-5 temporally change. For example, in a case where the sensor position designator 2 is set for the sensor 1-5 at time $T_6$, the relative positional relationship of the vehicle obtained by the measurement points 44 and 54 differs from the relative positional relationship of the vehicle obtained by the measurement points 45 and 55 at time $T_6$. Even in such a case, if the size information has been obtained and the sensor position designators have been set, the measurement results are associated with the same second information, so the measurement results can be recognized as being for the same vehicle.

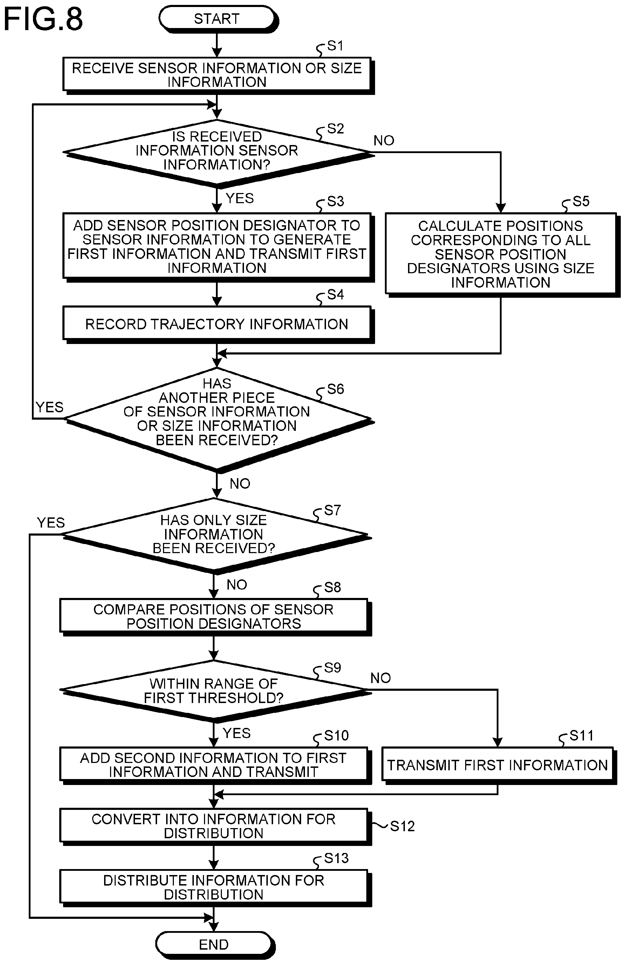

FIG. 8 is a flowchart illustrating the operation of the object identification device 10 according to the first embodiment. The operation of the object identification device 10 is processed at regular intervals. The acquisition unit 11 receives sensor information from the sensor 1 or size information from the size information transmitter 2 (step S1). If the information received by the acquisition unit 11 is sensor information (step S2: Yes), the designator adding unit 12 adds a sensor position designator to the received sensor information to generate first information, and transmits the first information to the information integration unit 13 (step S3). The information integration unit 13 records the first information as trajectory information in association with a past measurement result (step S4). If there is no past measurement result, no association is made and the information is simply recorded as trajectory information. If the information received by the acquisition unit 11 is size information (step S2: No), the information integration unit 13 calculates the positions corresponding to all sensor position designators using the size information (step S5).

If another piece of sensor information or size information has been received in the determination cycle (step S6: Yes), the process returns to step S2. If no other piece of sensor information or size information has been received in the determination cycle (step S6: No), the process proceeds to step S7. If only the size information has been received within the current determination cycle (step S7: Yes), the process ends. If information other than the size information has been received within the current determination cycle (step S7: No), the process proceeds to step S8. The information integration unit 13 compares the position of the sensor position designator added to the sensor information with, among all sensor position designators obtained from the current or past size information, the position of the sensor position designator having the same value as the sensor information (step S8). If the difference between the position of the sensor position designator added to the sensor information and the position of the sensor position designator obtained from the size information and having the same value as the sensor information is within the range of the first threshold (step S9: Yes), the information integration unit 13 adds, to the first information, second information which includes the center position of the vehicle obtained from the size information and the acquisition time of the size information, and transmits the resultant information (step S10). Here, for comparison using past size information, a second threshold may be provided for the difference between the current time and the acquisition time of the size information so that the size information within the second threshold can be used for comparison. Alternatively, for comparison using past size information, the sensor information may be corrected to a value corresponding to the acquisition time of the size information so that the corrected sensor information can be compared with the size information. Further, all pieces of first information to which the same second information is added are regarded as information of the same vehicle, so the position information is integrated as information derived from the same vehicle, and transmitted to the distribution information conversion unit 14.

The integration of position information involves, for example, calculating the average center position value of the vehicle using the first information and the information on the positions of all sensor position designators determined to be for the same vehicle, and adding the calculated value to the first information to which the information on the positions of all sensor position designators has been added. Alternatively, the integration of position information involves, for example, conversion into an information format in which the size of the vehicle and the center position of the vehicle are integrated. If the difference between the position of the sensor position designator added to the sensor information and the position of the sensor position designator obtained from the size information and having the same value as the sensor information is not within the range of the first threshold (step S9: No), the information integration unit 13 transmits the first information to the distribution information conversion unit 14 without adding second information to the first information (step S11). The distribution information conversion unit 14 converts the information received from the information integration unit 13 into information for distribution (step S12). The distribution unit 15 distributes the information for distribution (step S13).

As described above, in the present embodiment, the acquisition unit 11 acquires sensor information from the sensor 1. The acquisition unit 11 also acquires size information from the size information transmitter 2, and transmits the size information to the information integration unit 13. The designator adding unit 12 adds a sensor position designator to the sensor information to generate first information, and transmits the first information to the information integration unit 13. The information integration unit 13 calculates all sensor position designators of the vehicle using the size information. The information integration unit 13 also determines whether the difference between the position of the sensor position designator obtained from the first information and, among all sensor position designators obtained using the size information, the position of the sensor position designator having the same value as the first information is within the range of the first threshold. If the difference is within the range of the first threshold, the vehicle from which the first information has been acquired is considered to be the same as the vehicle from which the size information has been acquired, and second information is added to the first information. Further, pieces of the position information of the first information to which the same second information is added are integrated. The first information with the second information has a high degree of reliability, and the first information without the second information has a low degree of reliability. Therefore, by using the sensor information obtained by the sensor 1, the size information as the measurement result of the camera, and the sensor position designators, it is possible to determine whether measurement points from the plurality of sensors 1 belong to the same vehicle. This can reduce or prevent errors in determining whether the measurement results of the plurality of sensors 1 are for the same vehicle.

Second Embodiment.

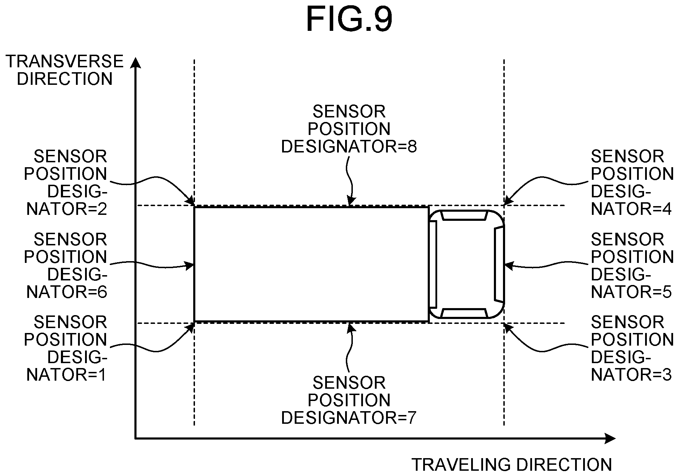

In the first embodiment, a sensor position designator is set for each sensor 1 and for each road area. In the present embodiment, a sensor position designator is also set for each type of vehicle. FIG. 9 is a diagram illustrating exemplary definitions of sensor position designators according to the second embodiment. In the present embodiment, sensor position designators are defined not only for an ordinary vehicle but also for a truck, i.e. a type of vehicle different from an ordinary vehicle. Because a truck has a long shape in the traveling direction of a road, the lateral sides of the vehicle can be measured in addition to the sensor position designators defined for an ordinary vehicle. However, because of the long shape, it may be difficult to determine whether the measured position belongs to the front part of the truck or the rear part of the truck. Therefore, a sensor position designator 7 and a sensor position designator 8 are newly defined. The sensor position designator 7 indicates that the right side of the vehicle has been measured but it is unclear whether the measured position belongs to the front or rear part of the vehicle. The sensor position designator 8 indicates that the left side of the vehicle has been measured but it is unclear whether the measured position belongs to the front or rear part of the vehicle.

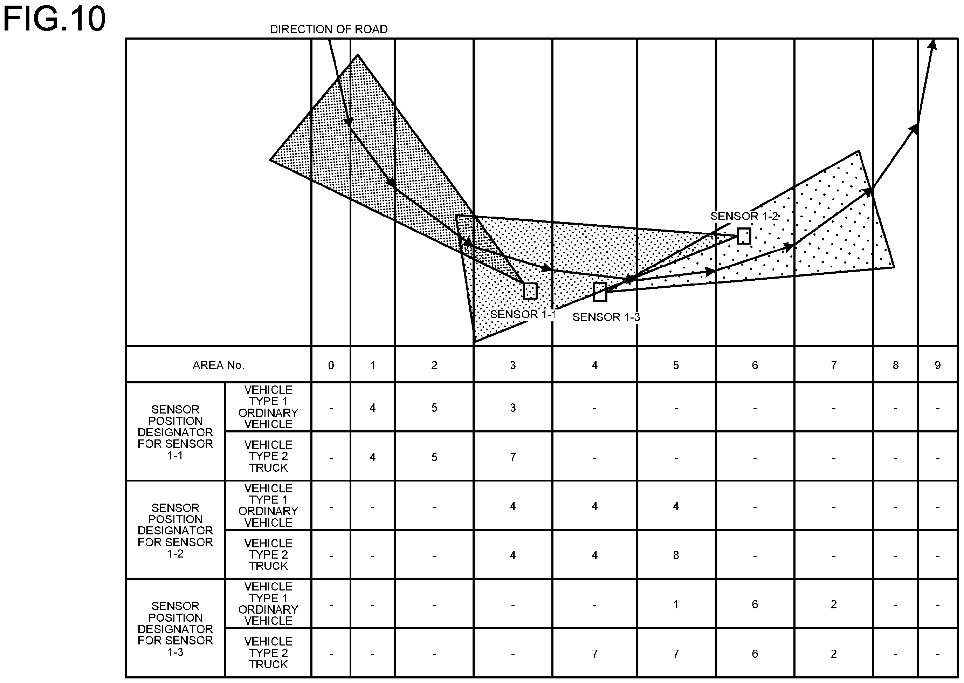

FIG. 10 is a diagram illustrating exemplary settings of sensor position designators according to the second embodiment. In FIG. 10, for example, the sensor position designator 7 is set for the area No. 3 of the sensor 1-1. The sensor position designator 8 is set for the area No. 5 of the sensor 1-2. The sensor position designator 7 and the sensor position designator 8 are effectively set for a type of vehicle having a long vehicle length, such as a truck, when it is unclear which part of the lateral sides of the vehicle has been measured, e.g. when the vehicle passes just beside the sensor 1 such as a radar or when the vehicle passes near the angle limit of the measurement range of the sensor 1. In the present embodiment, because sensor information is integrated using sensor position designators for different types of vehicles, the information integration unit 13 needs to collect not only size information but also target vehicle type information. Alternatively, the information integration unit 13 needs to estimate vehicle type information from size information.

As described above, in the present embodiment, by adding information on the type of vehicle to sensor position designators, the object identification device 10 can more easily determine whether measurement points from the plurality of sensors 1 belong to the same vehicle. This can prevent errors in determining whether the measurement results of the plurality of sensors 1 are for the same vehicle.

Third Embodiment.

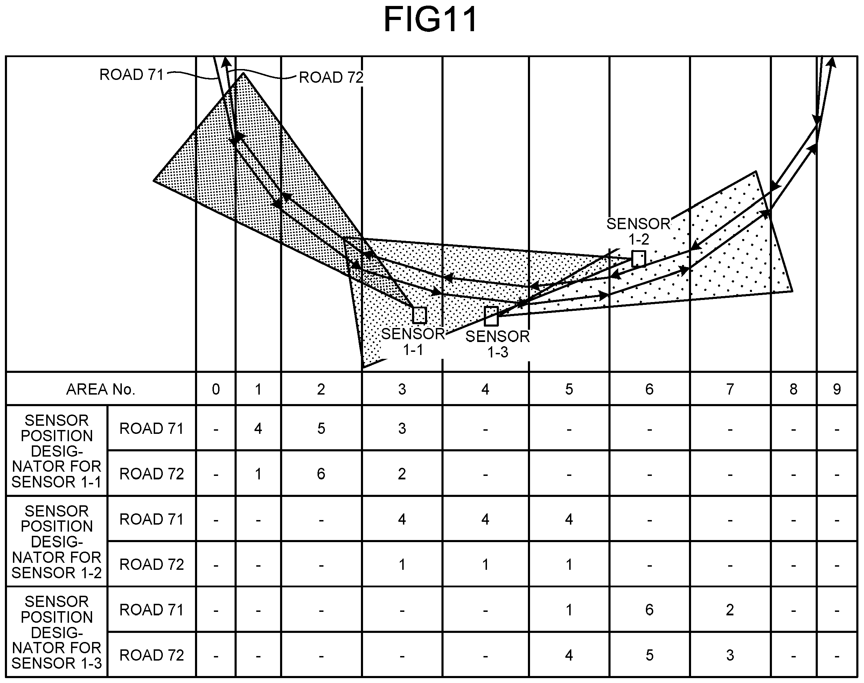

In the first embodiment, a sensor position designator is set for each sensor 1 and for each road area. In the present embodiment, a sensor position designator is also set for the traveling direction of the road. FIG. 11 is a diagram illustrating exemplary settings of sensor position designators according to the third embodiment. FIG. 11 depicts an example of assigning sensor position designators when there is a road 71 and a road 72 for the opposite direction of the road 71.

For setting a sensor position designator for each traveling direction of the road, the information integration unit 13 obtains information on the traveling direction of the road on which the vehicle travels based on the speed of the vehicle, distribution information from the on-board instrument, and the like. Alternatively, because pieces of sensor information with different traveling directions of roads are often derived from vehicles traveling on the roads with different traveling directions, when pieces of sensor information with different traveling directions of roads are acquired, these are defined as roads with different directions, and a sensor position designator is set for each one.

As described above, in the present embodiment, by adding information on the direction of the road to sensor position designators, the object identification device 10 can more easily determine whether measurement points from the plurality of sensors 1 belong to the same vehicle. This can reduce or prevent errors in determining whether the measurement results of the plurality of sensors 1 are for the same vehicle.

Fourth Embodiment.

In some cases, information on the traveling direction of a road can be obtained by a camera or the like. If the information on the traveling direction of the road obtained by the camera does not match the information on the sensor position designator obtained from the sensor 1, the sensor position designator may be updated based on the traveling direction of the road obtained by the camera or the like.

As described above, in the present embodiment, in a case where information on the traveling direction of a road obtained by a camera or the like is obtained, the sensor position designator can be updated using the information on the traveling direction of the road obtained by the camera or the like, which makes same-vehicle determination easier. This can reduce or prevent errors in determining whether the measurement results of the plurality of sensors 1 are for the same vehicle.

The configurations described in the above-mentioned embodiments indicate examples of the contents of the present invention. The configurations can be combined with another well-known technique, and some of the configurations can be omitted or changed in a range not departing from the gist of the present invention.

Reference Signs List

1, 1-1 to 1-n sensor; 2, 2-1 to 2-m size information transmitter; 10 object identification device; 11 acquisition unit; 12 designator adding unit; 13 information integration unit; 14 distribution information conversion unit; 15 distribution unit; 20 control circuit; 20a processor; 20b memory; 31 to 33 measurement range; 41 to 45, 51 to 55 measurement point; 61, 62 track pair; 71, 72 road.

**Claims**

1. An object identification device comprising:

an acquisition unit to acquire, from a sensor that measures a position of an object and a speed of the object, sensor information measured by the sensor, and acquire size information from a device that transmits size information indicating a size and a position of the object;
a designator adding unit to add, to each piece of the sensor information, a sensor position designator indicating which part of the object is likely to be detected; and
an information integration unit to determine, based on the sensor position designator, whether the object corresponding to the size information and the object corresponding to the sensor information are the same.

2. The object identification device according to claim 1, wherein a road is approximated with a plurality of straight lines and divided into areas corresponding one-to-one to the straight lines, and the sensor position designator is set for each of the areas.

3. The object identification device according to claim 2, wherein
the sensor position designator is set for each traveling direction of the road.

4. The object identification device according to any one of claims 1 to 3, wherein
the sensor position designator is set for each type of vehicle.

5. The object identification device according to claim 2 or 3, wherein
the information integration unit updates the sensor position designator using a traveling direction of the road.

# FIG.1

```
              ┌───────┐    ┌─────────────────┐
              │  GPS  │    │   ASSIGNMENT    │
              │       │    │ INFORMATION FOR │
              └───┬───┘    │ SENSOR POSITION │
                  ┊        │   DESIGNATORS   │
                  ┊        └────────┬────────┘
                  ┊                 ┊
```

```
 ┌───────┐1-1
 │       │────►┐
 └───────┘     │
 ┌───────┐1-2  │   ┌──────┐11  ┌──────────┐12
 │       │────►│   │      │    │DESIGNATOR│
 └───────┘     │   │      │───►│ADDING    │
  ⋮ 1-n        │   │ACQUI-│    │UNIT      │
 ┌───────┐     ├──►│SITION│    └────┬─────┘
 │       │────►│   │UNIT  │         │
 └───────┘     │   │      │         ▼
 ┌───────┐2-1  │   │      │13  ┌──────────┐
 │       │────►│   │      │    │INFORMATION│
 └───────┘     │   │      │───►│INTEGRATION│
  ⋮ 2-m        │   │      │    │UNIT       │
 ┌───────┐     │   └──────┘    └──────────┘
 │       │────►┘
 └───────┘
```

DISTRI-BUTION INFOR-MATION CON-VER-SION UNIT  14

DISTRI-BUTION UNIT  15

10

# FIG.2

20

┌─────────────┐20a        ┌─────────────┐20b
│  PROCESSOR  │            │   MEMORY    │
└──────┬──────┘            └──────┬──────┘
       │                          │
───────┴──────────────────────────┴───────

# FIG.3

TRANSVERSE DIRECTION

SENSOR POSITION DESIG-NATOR=2

SENSOR POSITION DESIG-NATOR=6

SENSOR POSITION DESIG-NATOR=1

SENSOR POSITION DESIG-NATOR=4

SENSOR POSITION DESIG-NATOR=5

SENSOR POSITION DESIG-NATOR=3

TRAVELING DIRECTION

# FIG.4

| AREA No. | 0 | 1 | 2 | 3 | 4 | 5 | 6 | 7 | 8 | 9 |
|---|---|---|---|---|---|---|---|---|---|---|
| SENSOR POSITION DESIGNATOR FOR SENSOR 1-1 | - | 4 | 5 | 3 | - | - | - | - | - | - |
| SENSOR POSITION DESIGNATOR FOR SENSOR 1-2 | - | - | - | 4 | 4 | 4 | - | - | - | - |
| SENSOR POSITION DESIGNATOR FOR SENSOR 1-3 | - | - | - | - | - | 1 | 6 | 2 | - | - |

# FIG.5

SENSOR POSITION DESIGNA-TOR 2

ROAD AREA FOR WHICH SENSOR POSITION DESIGNA-TORS ARE SET

SENSOR POSITION DESIGNA-TOR 4

SENSOR POSITION DESIGNA-TOR 5

LINE B

LEFT END OF ROAD

STARTING POINT OF ROAD AREA

WIDTH OF ROAD

TRAVELING DIRECTION

RIGHT END OF ROAD

LINE A

ACTUAL ROAD

SENSOR POSITION DESIGNA-TOR 6

SENSOR POSITION DESIGNA-TOR 1

SENSOR POSITION DESIGNA-TOR IS 0 JUST BESIDE ROAD

SENSOR POSITION DESIGNA-TOR 3

EP 3 754 372 A1

# FIG.6

☐ MEASUREMENT RESULT BY CAMERA   ◯ MEASUREMENT BY SENSOR 1-4   ⬭ MEASUREMENT BY SENSOR 1-5

SENSOR ARRANGEMENT DIAGRAM

TIME $T_1$: SENSOR MEASUREMENT START, OBJECT IDENTIFICATION START

TIME $T_2$: RADAR MEASUREMENT IN PROGRESS, TRAJECTORY INFORMATION ACQUISITION START

TIME $T_3$: CAMERA SHOOTING

TIME $T_4$: SENSOR MEASUREMENT IN PROGRESS, TRACK RECORDING IN PROGRESS, IMAGE PROCESSING IN PROGRESS

TIME $T_5$: RECEPTION OF IMAGE PROCESSING RESULT. DETECTION OF PAIR OF INTER-SENSOR MEASUREMENT POINTS

TIME $T_6$: CONTINUED PAIR DETERMINATION

# FIG.7

TRANSVERSE
DIRECTION

SENSOR
POSITION
DESIG-
NATOR=2

SENSOR
POSITION
DESIG-
NATOR=6

SENSOR
POSITION
DESIG-
NATOR=1

L

SENSOR
POSITION
DESIG-
NATOR=4

SENSOR
POSITION
DESIG-
NATOR=5

W

(X, Y)

TRAVELING
DIRECTION

SENSOR
POSITION
DESIG-
NATOR=3

FIG.8

```
                    ( START )
                        │
                        ▼                        ⌐S1
        ┌───────────────────────────────────┐
        │  RECEIVE SENSOR INFORMATION OR SIZE │
        │             INFORMATION             │
        └───────────────────────────────────┘
                        │
                        ▼                        ⌐S2
              ╱─────────────────╲     NO
             ╱   IS RECEIVED      ╲───────────────────┐
             ╲ INFORMATION SENSOR ╱                   │
              ╲   INFORMATION?   ╱                     │
               ╲───────────────╱                      │
                    │ YES            ⌐S3               ▼                ⌐S5
        ┌───────────────────────────────┐   ┌───────────────────────────┐
        │ ADD SENSOR POSITION DESIGNATOR │   │   CALCULATE POSITIONS     │
        │ TO SENSOR INFORMATION TO       │   │  CORRESPONDING TO ALL     │
        │ GENERATE FIRST INFORMATION AND │   │   SENSOR POSITION         │
        │ TRANSMIT FIRST INFORMATION     │   │ DESIGNATORS USING SIZE    │
        └───────────────────────────────┘   │      INFORMATION          │
                        │        ⌐S4          └───────────────────────────┘
        ┌───────────────────────────────┐               │
        │  RECORD TRAJECTORY INFORMATION │               │
        └───────────────────────────────┘               │
                        │◄──────────────────────────────┘
                        ▼                        ⌐S6
              ╱─────────────────╲
       YES   ╱       HAS          ╲
      ◄──────╲  ANOTHER PIECE     ╱
             ╱ OF SENSOR INFORMATION╲
             ╲  OR SIZE INFORMATION ╱
              ╲   BEEN RECEIVED?   ╱
               ╲─────────────────╱
                    │ NO
                    ▼                        ⌐S7
              ╱─────────────────╲
       YES   ╱   HAS ONLY SIZE   ╲
      ◄──────╲   INFORMATION      ╱
             ╲   BEEN RECEIVED?   ╱
              ╲─────────────────╱
                    │ NO             ⌐S8
        ┌───────────────────────────────┐
        │  COMPARE POSITIONS OF SENSOR  │
        │      POSITION DESIGNATORS     │
        └───────────────────────────────┘
                    │
                    ▼                        ⌐S9
              ╱─────────────────╲     NO
             ╱ WITHIN RANGE OF   ╲──────────────┐
             ╲  FIRST THRESHOLD? ╱               │
              ╲─────────────────╱                │
                    │ YES          ⌐S10          ▼              ⌐S11
        ┌───────────────────────────────┐  ┌───────────────────────────┐
        │ ADD SECOND INFORMATION TO      │  │  TRANSMIT FIRST INFORMATION│
        │ FIRST INFORMATION AND TRANSMIT │  └───────────────────────────┘
        └───────────────────────────────┘               │
                    │◄──────────────────────────────────┘
                    ▼                        ⌐S12
        ┌───────────────────────────────┐
        │ CONVERT INTO INFORMATION FOR   │
        │         DISTRIBUTION           │
        └───────────────────────────────┘
                    │                        ⌐S13
        ┌───────────────────────────────┐
        │  DISTRIBUTE INFORMATION FOR    │
        │         DISTRIBUTION           │
        └───────────────────────────────┘
                    │
                    ▼
                ( END )
```

# FIG.9

TRANSVERSE
DIRECTION

SENSOR
POSITION
DESIGNATOR=8

SENSOR
POSITION
DESIG-
NATOR=2

SENSOR
POSITION
DESIG-
NATOR=6

SENSOR
POSITION
DESIG-
NATOR=1

SENSOR
POSITION
DESIGNATOR=7

SENSOR
POSITION
DESIG-
NATOR=4

SENSOR
POSITION
DESIG-
NATOR=5

SENSOR
POSITION
DESIG-
NATOR=3

TRAVELING DIRECTION

# FIG.10

DIRECTION OF ROAD

SENSOR 1-1  SENSOR 1-2  SENSOR 1-3

| AREA No. | | 0 | 1 | 2 | 3 | 4 | 5 | 6 | 7 | 8 | 9 |
|---|---|---|---|---|---|---|---|---|---|---|---|
| SENSOR POSITION DESIGNATOR FOR SENSOR 1-1 | VEHICLE TYPE 1 ORDINARY VEHICLE | - | 4 | 5 | 3 | - | - | - | - | - | - |
| | VEHICLE TYPE 2 TRUCK | - | 4 | 5 | 7 | - | - | - | - | - | - |
| SENSOR POSITION DESIGNATOR FOR SENSOR 1-2 | VEHICLE TYPE 1 ORDINARY VEHICLE | - | - | - | 4 | 4 | 4 | - | - | - | - |
| | VEHICLE TYPE 2 TRUCK | - | - | - | 4 | 4 | 8 | - | - | - | - |
| SENSOR POSITION DESIGNATOR FOR SENSOR 1-3 | VEHICLE TYPE 1 ORDINARY VEHICLE | - | - | - | - | - | 1 | 6 | 2 | - | - |
| | VEHICLE TYPE 2 TRUCK | - | - | - | - | 7 | 7 | 6 | 2 | - | - |

EP 3 754 372 A1

# FIG11

| AREA No. | | 0 | 1 | 2 | 3 | 4 | 5 | 6 | 7 | 8 | 9 |
|---|---|---|---|---|---|---|---|---|---|---|---|
| SENSOR POSITION DESIG-NATOR FOR SENSOR 1-1 | ROAD 71 | - | 4 | 5 | 3 | - | - | - | - | - | - |
| | ROAD 72 | - | 1 | 6 | 2 | - | - | - | - | - | - |
| SENSOR POSITION DESIG-NATOR FOR SENSOR 1-2 | ROAD 71 | - | - | - | 4 | 4 | 4 | - | - | - | - |
| | ROAD 72 | - | - | - | 1 | 1 | 1 | - | - | - | - |
| SENSOR POSITION DESIG-NATOR FOR SENSOR 1-3 | ROAD 71 | - | - | - | - | - | 1 | 6 | 2 | - | - |
| | ROAD 72 | - | - | - | - | - | 4 | 5 | 3 | - | - |

EP 3 754 372 A1

## INTERNATIONAL SEARCH REPORT

| International application No. |
| --- |
| PCT/JP2018/013851 |

| A. CLASSIFICATION OF SUBJECT MATTER |
| --- |
| Int.Cl. G01S13/86(2006.01)i, G01S13/91(2006.01)i, G08G1/01(2006.01)i |

According to International Patent Classification (IPC) or to both national classification and IPC

| B. FIELDS SEARCHED |
| --- |
| Minimum documentation searched (classification system followed by classification symbols)<br>Int.Cl. G01S7/00-17/95, G08G1/01, G06T7/00 |

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2001-296352 A (OMRON CORPORATION) 26 October 2001, entire text, all drawings (Family: none) | 1-5 |
| A | WO 2017/170799 A1 (DENSO CORPORATION) 05 October 2017, entire text, all drawings & JP 2017-181450 A | 1-5 |
| A | JP 2011-232155 A (DENSO CORPORATION) 17 November 2011, paragraphs [0044]-[0059], fig. 3 & US 2011/0260909 A1, paragraphs [0070]-[0094], fig. 3A, 3B & DE 102011017540 A1 | 1-5 |

☒ Further documents are listed in the continuation of Box C. ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 15.06.2018 | 26.06.2018 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2018/013851

| | C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2008-045974 A (FUJI HEAVY IND LTD.) 28 February 2008, paragraph [0016]<br>(Family: none) | 1-5 |
| A | JP 2017-101969 A (FURUKAWA ELECTRIC CO., LTD.) 08 June 2017, entire text, all drawings<br>(Family: none) | 2-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016153775 A